# EUROPEAN PATENT APPLICATION

(11) **EP 4 786 437 A1**
(43) Date of publication of application: **05.08.2026**
(21) Application number: 25155116.4
(22) Date of filing: 30.01.2025
(51) Int. Cl.: C04B 20/02, C04B 28/04, C04B 111/00

(54) **PROCESS FOR THE PREPARATION OF A COMPOSITE FILLER COMPOSITION AND USE THEREOF**

(71) Applicant: Holcim Technology Ltd., 6300 Zug (CH)
(72) Inventor: WATT, Olivier, 38070 SAINT QUENTIN FALLAVIER (FR); CARNOT, Antoine, 38070 SAINT QUENTIN FALLAVIER (FR); SANDRA, Fabien, 38070 SAINT QUENTIN FALLAVIER (FR); BOULANOUAR, Youcef, 38070 SAINT QUENTIN FALLAVIER (FR); GUILLON, Emmanuel, 38070 SAINT QUENTIN FALLAVIER (FR); GAULD, Jasen Alexander, COALVILLE, LE67 1TL (GB)
(74) Representative: Regimbeau

(57) **Abstract**

The invention relates to a process for the preparation of a composite filter composition and the use of said composite filter composition in the preparation of a hydraulic composition.

## Description

### FIELD OF THE INVENTION

The invention relates to a process for the preparation of a composite filler composition and the use of the composite filler composition in the preparation of a hydraulic composition.

### BACKGROUND OF THE INVENTION

Cementitious building materials are commonly used in the construction industry, and generally rely upon the use of cement, in particular cement comprising Portland clinker. Hydraulic binders, such as cement, when mixed with water, set and harden, providing a solid construction material. Various mineral components can be added into the binder, the binder-water mixture to adapt the properties of the obtained construction material.

Portland clinker is obtained by calcination and decarbonation of raw materials at a temperature of about 1450°C. Owing to this energy demanding process, Portland clinker has a high carbon dioxide footprint.

WO2023/227630 discloses the use of biochar to produce low carbon concrete compositions. The biochar used in this application has a particle size where up to 35% of the particles have a size of more than 2 mm. Although this solution is promising in some applications, for other specific applications, biochar does not meet the desired specifications due to its coarse particle size.

There is still a desire to use biochar in cementitious building materials for specific applications. Often such materials require the use of biochar with a fine particle size. Unfortunately, industrial methods such as ball mill grinding cannot be easily performed without elaborated measures for controlling the safety risk associated with dust explosions, which can occur when fine biochar particles form an explosive cloud.

There is therefore a need to provide a solution for providing biochar with a finer particle size which is safe, in particular regarding the risk of explosion.

The present invention solves this problem by providing a method of grinding the biochar using a grinding material as grinding medium and optionally water.

The small particle size allows the use of the composite filler composition in a wide range of applications. Advantageously, the composite filler composition is safe to handle despite its small particle size.

### SUMMARY OF THE INVENTION

The invention relates to a process for the preparation of a composite filler composition, comprising the steps of:
(i) providing a composition C, comprising:
   - biochar having a maximum particle size ranging from 5 to 50 mm as determined by sieve analysis; and
   - at least one grinding material selected from the group consisting of sand, limestone, calcined clay, recycled concrete fines and mixtures thereof, having a maximum particle size ranging from 0 to 5 mm as determined by sieve analysis, wherein the weight ratio of grinding material to biochar ranges from 99/1 to 35/65; and
(ii) grinding the composition C to obtain a composite filler composition, wherein the grinding step is conducted in the presence of water when the weight ratio of the biochar in the composition C, expressed as the dry weight of the biochar based on the total dry weight of the dry weight of the composition C, is higher than or equal to 30 wt%.

The present invention further relates to the use of a grinding material selected from the group consisting of sand, limestone, calcined clay, recycled concrete fines and mixtures thereof as grinding medium of biochar, preferably biochar having a maximum particle size ranging from 5 mm to 50 mm.

The present invention further relates to a composite filler composition obtained by the process of the present invention and to the use of the composite filler composition for the preparation of a hydraulic composition.

In another aspect, the present invention relates to a process for the preparation of a hydraulic composition comprising mixing the composite filler composition of the present invention with one or more components selected from the group consisting of hydraulic binder, sand, optionally aggregates and mixing water.

In a further aspect, the present invention relates to a hydraulic composition, preferably concrete and/or mortar and/or tile adhesive composition, comprising a composite filler composition of the present invention.

### DETAILLED DESCRIPTION

Biochar: As used herein, the term "biochar" designates a solid porous carbonaceous material which is produced by thermal decomposition of biomass.

Biochar is obtained by the thermal decomposition of biomass at a temperature ranging from 350 to 1200°C, preferably from 350 to 800°C, more preferably from 400 to 750°C and even more preferably from 450°C to 700°C. Advantageously, the heat treatment is a pyrolysis carried out at a temperature of above 550°C, and advantageously below 750°C or 700°C. The pyrolysis is typically performed in an oxygen-deprived atmosphere. Oxygen-deprived atmosphere is understood as an atmosphere with oxygen content below 21%. Advantageously, pyrolysis is performed in an oxygen reduced atmosphere with less than 10% oxygen in the atmosphere. Preferably the biochar is a renewable biochar.

Biomass: As used herein, the term "biomass" designates biological mass that can be used as a renewable energy source. It refers to any type of biomass, preferably comprising or consisting of a biomass of the solid type, and in particular a biomass of the lignocellulosic type. Non-limitative examples of types of biomass include:
- wood-based biomass, for example wood waste such as recycled crushed wood from demolition or furniture,
- residues from agricultural operations (in particular straw, maize cobs), residues from forestry operations,
- products from forestry operations,
- residues from sawmills and
- dedicated crops, for example short rotation coppice, or
- residues from microalgaes.

Preferably, biomass feedstock includes but is not limited to agricultural residues including peat, a solid formed due to the accumulation of partially degraded biomass and contains highly varying fractions of ash-forming elements.

Hydraulic binder: As used herein, the term "hydraulic binder" refers to a mineral material which, when mixed with water, forms a paste which sets and hardens as a result of hydration reactions.

The terms "binder" and "hydraulic binder" will have the same meaning in the present disclosure.

Cement: As used herein, cement refers to a mixture of Portland Clinker, calcium sulphate and one or more mineral components and optionally recycled concrete fines.

Calcium sulphate: As used herein, calcium sulphate includes gypsum (calcium sulphate dihydrate, CaSO₄.2H₂O), hemi-hydrate (CaSO₄.1/2H₂O), anhydrite (anhydrous calcium sulphate, CaSO₄) and a mixture thereof. Calcium sulphate produced as a by-product of certain industrial processes may also be used. Preferably, the calcium sulphate content ranges from 0% to 5% by weight of the cement.

Mineral component: As used herein, the mineral component encompasses slag (for example, as defined in the European NF EN 197-1 Standard of April 2012, paragraph 5.2.2), pozzolanic materials (for example as defined in the European NF EN 197-1 Standard of April 2012, paragraph 5.2.3), fly ash (for example, as described in the European NF EN 197-1 Standard of April 2012, paragraph 5.2.4), calcined schists (for example, as described in the European NF EN 197-1 Standard of April 2012, paragraph 5.2.5), material containing calcium carbonate, for example limestone (for example, as defined in the European NF EN 197-1 Standard paragraph 5.2.6), limestone components (for example, as defined in the "Concrete" NF P 18-508 Standard), silica fume (for example, as defined in the European NF EN 197-1 Standard of April 2012, paragraph 5.2.7), siliceous components (for example, as defined in the "Concrete" NF P 18-509 Standard), metakaolin or mixtures thereof.

Mortar: As used herein, mortar refers to a composition comprising cement and sand which in the presence of water forms a paste which sets and hardens by means of hydration processes and which after hardening, retains its strength and stability even under water.

Concrete: As used herein, concrete refers to a composition comprising a cement composition and aggregates and sand which in presence of water forms a paste which sets and hardens by means of hydration reactions and processes and which, after hardening, retains its strength and stability even under water. Specifically, concrete is as defined in the standard NF EN 206+A1 of2016.

Tile adhesive: As used herein, tile adhesive refers to a mixture consisting of hydraulic binders, sand and organic additives mixed with water or a mixing liquid just before use to form a paste which sets and hardens by means of hydration processes and which after hardening retains its strength and stability even under water and temperature.

Sand: As used herein, sand refers to a natural, synthetic or recycled inorganic compound having a maximum particle size which ranges from 0 mm to 5 mm, preferably 0.1 to 5 mm. Preferably the inorganic compound is selected from the group consisting of sand, quartz (silica sand), natural river sand and/or calcium carbonate.

Corrective sand: as used herein, corrective sand refers to sand that is added to a hydraulic composition and not being used as grinding material, having a maximum particle size ranging from 0 to 5 mm, preferably ranging from 0.1 to 4 mm.

Aggregate: As used herein, aggregate refers to any inorganic material which can be used for the preparation of a hydraulic composition. The maximum particle size of aggregates ranges from 5.1 mm to 32 mm. Aggregates can notably comprise gravel.

Limestone: As used herein, limestone refers to a material comprising calcium carbonate (CaCO₃) as defined in the European NF EN 197-1 Standard of April 2012 in paragraph 5.2.6.

Recycled concrete fines: As used herein, recycled concrete fines refer to a material as defined in the European EN 196-6 of June 2023 in paragraph 4.2.

Calcined clay: As used herein, calcined clay refers to natural calcined pozzolana as defined in the European NF EN 197-1 standard of April 2012 in paragraph 5.2.3.3.

Particle size and particle size distributions are measured using dry sieve analysis according to the European NF EN 933-1 standard of Mai 2012.

D50: As used herein, corresponds to the median or 50th percentile of the weight distribution of the total particles, i.e. 50% of the weight consists of particles for which the size is less than D50 and 50% with a size greater than D50. D50 is determined from the particle size distribution obtained using the dry sieve method.

Moisture content is calculated as the weight of the water in the sample measured according to the European EN 1097-5 standard of March 2008 and divided by the initial dry weight of the sample.

Accelerator: As used herein, accelerator refers to accelerators as defined in the standard NF EN 934-2 of September 2002. Suitable accelerators may for example be selected from calcium salts, potassium salts and sodium salts wherein the anion may be nitrate, nitrite, chloride, formate, thiocyanate, sulphate bromide, carbonate or mixtures thereof; alkali silicates and aluminates for example sodium silicate, potassium silicate, sodium aluminate, potassium aluminate or mixture thereof.

Retarder: As used herein, retarder refers to retarders as defined in the standard NF EN 934-2 of September 2002. Suitable retarder may for example be based on lignosulfonates, carbohydrates or oxides of zinc or lead, carboxylic acids, fluorides, phosphates.

20-Liter Sphere Test: As used herein, 20-L sphere test refers to a test for the measurement of the explosivity of a powder as defined in standard EN ISO/IEC 80079-20-2. The test is performed to determine if a powder sample at a defined concentration suspended in the air can ignite. The powder is dispersed in a 20-L sphere in depression from a previous chamber pressurized at 20 bars of air. The resulting pressure in the 20-L sphere is at the atmospheric pressure. The ignition is made thanks to a pyrotechnic lighter with an energy of 2 kilojoules. During the ignition, the pressure is recorded continuously. When the variation of pressure (Pm) is higher than or egal to 0.3 bar in the 20-L sphere, the material is defined as explosive. When the variation of pressure is lower than 0.3 bar in the 20-L sphere, the material is defined as non-explosive.

Non-explosive composition: As used herein, non-explosive composition refers to a composition at a defined concentration which has been tested according to the 20-Liter Sphere Test defined hereinabove and for which the recorded variation of pressure (Pm) is lower than 0.3 bar in the 20-L sphere.

### Process for the preparation of a composite filler composition

As previously mentioned, the use of biochar produced by conventional process is advantageous for lowering the carbon footprint of cementitious products but is limited due to the coarse maximum particle size of biochar (from 5 mm up to 50 mm) which is not compatible with demanding applications such as the preparation of mortar or tile adhesives. The preparation of finer biochar particles requires elaborated measures in order to control the explosion risk. The process of the present invention provides a safe solution for the preparation of composite filler composition comprising biochar with a finer particle size.

The invention relates to a process for the preparation of a composite filler composition, comprising the steps of:
(i) providing a composition C, comprising:
   - biochar having a maximum particle size ranging from 5 to 50 mm as determined by sieve analysis; and
   - at least one grinding material selected from the group consisting of sand, limestone, calcined clay, recycled concrete fines and mixtures thereof having a maximum particle size ranging from 0 to 5 mm as determined by sieve analysis, wherein the weight ratio of grinding material to biochar ranges from 99/1 to 35/65; and
(ii) grinding the composition C to obtain a composite filler composition, wherein the grinding step is conducted in the presence of water when the weight ratio of the biochar in the composition C, expressed as the dry weight of the biochar based on the total dry weight of the composition C, is higher than or equal to 30 wt.%.

According to the present invention, the biochar to be ground used has an initial maximum particle size ranging from 5 and 50 mm. Preferably the biochar used as an initial maximum particle size higher than or equal to 5 mm, preferably higher than or equal to 10 mm. Preferably the biochar used as an initial maximum particle size lower than or equal to 50 mm, preferably lower than or equal to 40, 30, 20 or 15 mm.

According to the present invention, the biochar to be ground has a moisture content of less than or equal to 70 wt.%, preferably less than or equal to 50 wt.%, more preferably less than or equal to 30 wt.%, based on the dry weight of the biochar to be ground.

Preferably, the biochar to be ground has a moisture content lower than or equal to 20 wt.%, preferably lower than or equal to 15 wt.%, more preferably lower than or equal to 10 wt.%, still more preferably lower than or equal to 5 wt.% based on the dry weight of the biochar to be ground. Advantageously the biochar is essentially dry having a moisture content of lower than or equal to 1 wt.% based on the dry weight of the biochar.

Generally, the biochar to be ground has a moisture content higher than or equal to 0.01 wt.%, preferably higher than or equal to 0.1 wt.% based on the dry weight of the biochar.

Depending on the initial moisture content of the biochar, the moisture content of the biochar can be lowered by removing water from the biochar in a drying process to optimise the grinding process. Any suitable drying process can be used to achieve this goal.

Preferably, the biochar with an initial moisture content above 50 wt.% is dried to a moisture content of less than or equal 30 wt.%, preferably to a moisture content of less than or equal 20 wt.%, even more preferably to a moisture content of less than or equal 10 wt.%.

The grinding process of the present invention can be performed using any type of grinding equipment known to the person skilled in the art and is not limited to a particular type of grinder.

Advantageously, the grinding process of the present invention is an autogenous process which uses a grinding material for grinding the biochar, preferably the grinding material is the only grinding agent. In particular, in the context of the present invention, no specific grinding equipment is required, like for example ball mills. The process may therefore be performed in any type of grinding unit where shear or attrition forces are created by using the grinding material. The process may preferably be performed in an attrition scrubber/cell, a concrete mixer, preferably a ploughshare mixer. Advantageously, the process of the present invention is less energy demanding compared to other grinding processes and has therefore a lower carbon footprint. The grinding process can be a batch process or a continuous process. Preferably, the process is a continuous process in which the grinding medium and the biochar are continuously added during the grinding process. Advantageously, the grinding process can comprise several grinding stages, in which the material is ground in several subsequent grinding steps.

Any grinding material compatible for use as a filler for the preparation of hydraulic composition such as mortar, concrete and/or tile adhesive may be used, provided however that such grinding material displays a maximum particle size lower than or equal to 5 mm, preferably lower than or equal to 3 mm, more preferably lower than or equal to 2 mm, and still more preferably lower than or equal to 1 mm.

Preferably the grinding material used in the process of the present invention is generally selected from the group consisting of sand, limestone, calcined clay, recycled concrete fines and mixture thereof, most preferably the grinding material comprises sand. In a preferred embodiment, the grinding material used in the process of the present invention comprises at least 75 wt.%, preferably at least 95 wt.% of sand.

Preferably the sand displays a maximum particle size ranging from 0 to 3 mm, more preferably ranging from 0 to 2 mm, and still more preferably ranging from 0 to 1 mm. Preferably, the sand displays a D50 higher than or equal to 50 µm, preferably higher than or equal to 100 µm, more preferably higher than or equal to 300 µm. Preferably, the sand displays a D50 lower than or equal to 1500 µm, preferably lower than or equal to 1000 µm, more preferably lower than or equal to 600 µm.

According to the present invention, the grinding material to be ground has a moisture content of less than or equal to 70 wt.%, preferably less than or equal to 50 wt.%, more preferably less than or equal to 30 wt.%, based on the dry weight of the biochar to be ground.

Preferably, the grinding material has a moisture content of lower than or equal to 20 wt.%, preferably lower than or equal to 15 wt.%, more preferably lower than or equal to 10 wt.%, still more preferably lower than or equal to 5 wt.%, based on the dry weight of the grinding material. Advantageously the grinding material is essentially dry having a moisture content lower than or equal to 1 wt.% based on the dry weight of the grinding material. Generally, the grinding material has a moisture content higher than or equal to 0.01 wt.%, preferably higher than or equal to 0.1 wt.% based on the dry weight of the grinding material.

Depending on the initial moisture content of the grinding material, the moisture content of the grinding material can be lowered by drying to optimise the grinding process. Any suitable drying process can be used to achieve this goal.

Preferably, the grinding material with an initial moisture content above 50 wt.% is dried to a moisture content of less than or equal 30 wt.%, preferably to a moisture content of less than or equal 20 wt.%, even more preferably to a moisture content of less than or equal 10 wt.%.

According to the present invention, the weight ratio of grinding material to the biochar in the composition C can range from 99/1 to 35/65, preferably from 80/20 to 40/60, more preferably from 70/30 to 60/40.

According to the present invention, the grinding step is conducted in the presence of water if the weight ratio of biochar in the composition C is higher than or equal to 30 wt.%.

In addition, it has been found that the presence of water in the composition C further reduces the explosivity risk. As a consequence, the proportion of biochar in composition C may be increased by adjusting its water content. This particular embodiment allows to further reduce the risk of explosion. The presence of water in the process can prevent the formation of a cloud of fines comprising biochar. In particular, the inventors have demonstrated that compositions C comprising a high concentration of biochar can be securely ground in the presence of water in the process. Accordingly, the presence of water is required during the grinding step (step ii) when the weight ratio of the biochar in the composition C, expressed as the dry weight of the biochar based on the total dry weight of the composition C is higher than or equal to 30 wt.%.

Preferably, the grinding step is conducted in the presence of water can indicate that the moisture content of the composition C is higher than or equal to 1 wt.%, preferably higher than or equal to 1.5 wt.%, preferably higher than or equal to 2 wt.%. based on the dry weight of the composition C.

According to an embodiment of the present invention, the process comprises a step wherein water is added before the grinding step. Generally, said water is added to the biochar to be ground, the grinding material or the composition C, preferably water is added to the grinding material.

According to another embodiment the water is present in the grinding material and/or biochar before step (i). As already mentioned, the grinding material and/or biochar may already comprise water before the grinding step. Depending on the initial moisture content, the moisture content of the grinding material and/or biochar can be adjusted by either adding water or removing water using an appropriate drying step.

According to a preferred embodiment, the process is conducted with the addition of water, preferably continuous addition of water.

Depending on the granulometry desired at the end of the process and the initial moisture content of the composition C, the ratio of water/grinding material/biochar to be ground may be adapted.

The process can therefore comprise a step wherein water is added to the biochar, the grinding material or the composition C in an amount from 2.0 wt.% to 10.0 wt.% based on the dry weight of the composition C, and wherein the addition of water is performed before and/or during step (i) or (ii).

In order to grind the biochar with the grinding material, the process is conducted under stirring. The person skilled in the art can adapt the speed of stirring depending notably on the size of biochar introduced in the process and/or the maximum particle size of the composite filler composition to be prepared in the process of the invention. For example, the stirring may be comprised between 10 rpm and 400 rpm.

Preferably, the grinding material is added into the mixer, followed by the addition of the biochar, optionally followed by addition of water.

Generally, the duration of the grinding step of the process depends on the type of mixer used, the desired maximum particle size of the composite filler composition and may be adapted by the person skilled in the art. Further the duration of the grinding step depends on the grinding volume and the grinding energy. For example, the duration of the grinding step may range from 2 minutes to 2 hours.

Generally, the temperature in the grinding unit is continuously monitored during the grinding step. The temperature generally ranges from 5°C to 80°C. More preferably, the temperature ranges from 15°C to 60°C.

The present invention further relates to a process for the preparation of a composite filler composition, comprising a further step (iii) wherein biochar is contacted with an inert gas selected from the group consisting of nitrogen, argon and carbon dioxide or a source of carbon dioxide, and wherein step (iii) and the grinding step (ii) can be performed successively, in any order, or simultaneously.

Preferably step (ii) and (iii) are performed simultaneously.

The process of the present invention advantageously allows to reduce the risk of dust explosions, which can occur when fine biochar particles form an explosive cloud. By injecting an inert gas into the grinding equipment during the grinding step (ii) oxygen concentration in the atmosphere can be reduced and the risk of a dust explosion is mitigated due to the suppression of conditions necessary for combustion.

Preferably, the inert gas is carbon dioxide or a source of carbon dioxide. Preferably, the concentration of carbon dioxide in the source of carbon dioxide is higher than the concentration of carbon dioxide in the atmospheric air, preferably the carbon dioxide source used is a by-product of cement production.

When carbon dioxide or a source of carbon dioxide is used, the process of the present invention advantageously allows to reduce the carbon footprint of cement production via carbon sequestration. WO2023/281220 discloses that biochar can be carbonized when exposed to carbon dioxide and act as a carbon sink. The carbon dioxide source can be in the form of gas or liquid *i.e.* supercritical CO₂. Preferably, the carbon dioxide source used is a by-product of cement production.

In another embodiment, the grinding material and the biochar comprised in the composite filler composition obtained according to the inventive process can be separated in a suitable process, for example a mechanical separation processes including but not limited to air classification, sieving or density separation. Preferably, the separation process can be a multi-stage separation process in which the grinding material is separated from the biochar in a multi-stage process.

According to an embodiment, the present invention relates to a process for the preparation of biochar having a maximum particle size ranging from 300 µm and 1000 µm comprising a grinding step for the preparation of a composite filler composition as described previously, followed by a step wherein biochar and the grinding material comprised in the composite filler composition are separated.

The composite filler composition obtained by the process of the present invention has a maximum particle size ranging from 0 to 5 mm, preferably 0.1 to 5 mm. Preferably, the maximum particle size is lower or equal to 5 mm. Preferably the maximum particle size may be lower or equal to 3 mm, lower or equal to 2 mm, lower or equal to 1 mm.

Generally, the composite filler composition obtained by the process of the present invention has a particle size D50 lower or equal to 1500 µm. Preferably the particle size D50 may be lower or equal to 1000 µm, lower or equal to 600 µm. Generally, the particle size D50 may be higher or equal to 50 µm, preferably higher or equal to 100 µm, preferably higher or equal to 300 µm.

Preferably the composite filler composition obtained by the process of the present invention is non-explosive wherein the explosivity is measured through a 20-Liter Sphere test at a concentration of 500 g/m³ according to EN ISO/IEC 80079-20-2. The invention further relates to a composite filler composition obtained according to the process of the present invention.

### Process for the preparation of a hydraulic composition

The present invention further relates to a process for the preparation of a hydraulic composition comprising mixing the composite filler composition of the present invention with one or more components selected from the group consisting of hydraulic binder, aggregates, corrective sand and/or mixing water.

Preferably, corrective sand is added to adjust the particle packing of the hydraulic composition. Preferably, the maximum particle size of the corrective sand ranges from 0 to 5 mm, more preferably from 0 to 2mm, even more preferably from 0 to 1 mm, most preferably from 0 to 500µm. Preferably, the maximum particle size of the corrective sand is finer than that of the sand comprised in the composite filler composition.

Preferably the hydraulic composition is a mortar, a concrete and/or a tile adhesive composition.

Preferably the process for the preparation of a hydraulic composition comprises the preparation of a premix, wherein the composite filler composition is mixed with the hydraulic binder and/or the aggregates. Then, the premix is mixed with mixing water. Alternatively, the composite filler of the invention and the mixing water are added simultaneously to a composition comprising hydraulic binder and/or aggregates.

Preferably the hydraulic binder comprises from 25.0 wt.% to 95.0 wt.%, preferably from 25.0 wt.% to 75.0 wt.%, preferably from 25.0 wt.% to 70.0 wt.%, more preferably from 30.0 wt.% to 60.0 wt.% Portland clinker, relative to the total weight of the hydraulic binder.

Advantageously, the source of Portland clinker in the hydraulic binder is selected from the group of cements consisting of CEM I, CEM II, CEM III, CEM IV, CEM V and CEM VI as defined in the standard EN-197-1 of April 2012, or in the standard NF EN 197-5 published in May 2021.

The present invention also relates to a hydraulic composition comprising hydraulic binder and a composite filler composition obtained by the process of the present invention.

The hydraulic composition generally comprises from 5 wt.% and 40 wt.% of Portland cement relative to the total weight of the hydraulic composition. In an embodiment, particularly adapted for the preparation of a tile adhesive, the content of cement can range from 25 wt.% to 35 wt.%. In another embodiment, particularly adapted for the preparation of a mortar, the content of cement can range from 10 wt.% to 15 wt.%. The content of biochar in the cementitious building material composition generally ranges from 1 wt.% and 20 wt.% relative to the total weight of the composition. In an embodiment, particularly adapted for the preparation of tile adhesives, the content of biochar can range from 5 wt.% to 15 wt.%. In another embodiment, particularly adapted for the preparation of mortar, the content of cement can range from 1 wt.% to 5 wt.%, preferably from 2.5 wt.% to 3.5 wt.%. In another embodiment, the hydraulic composition comprises optionally from 1 wt.% to 25 wt.%, preferably from 1 wt.% to 15 wt.%, more preferably from 1 wt.% to 10 wt.% of corrective sand.

In a preferred embodiment, the hydraulic composition comprises from 10 wt.% to 80 wt.% of total sand, based on the dry weight of the hydraulic composition, the total sand being defined as the amount of sand in the hydraulic composition consisting of the sand comprised in the composite filler composition and optionally the corrective sand.

In a preferred embodiment, the total sand consists essentially of the sand comprised in the hydraulic composition.

The hydraulic composition generally further comprises aggregates so as to obtain a composition of concrete. The content of aggregates in the hydraulic composition generally ranges from 70 wt.% and 90 wt.%. The content of aggregates refers to the amount of aggregates added in the hydraulic composition.

The hydraulic composition may further comprise a viscosifying agent, preferably comprising derivatives of cellulose, for example cellulose ethers soluble in water, such as sodium carboxymethyl, methyl, ethyl, hydroxyethyl and hydroxypropyl ethers; alginates; and xanthan, carrageenan or guar gum. A mixture of these agents may be used.

The hydraulic composition according to the invention may further comprise an accelerator and/or a retarder. However, it has to be noted the high early strength values may be obtained without any need to include a chemical accelerator. This is of interest as such chemical accelerators usually increase the strength development but may have a negative effect of the fresh concrete rheology, and especially the slump retention time.

The hydraulic composition according to the invention may further comprise a defoaming agent includes phosphates, such as tri-isobutyl phosphate, and/or silicones, such as polydimethylsiloxane, and combinations thereof. The defoaming agent can be in the form of a solution, a solid or preferably in the form of a resin, an oil or an emulsion, preferably in water. More particularly suitable are silicones comprising (RSiO0.5) and (R2SiO) moieties. In these formulae, the R radicals, which may be the same or different, are preferably hydrogen or an alkyl group of 1 to 8 carbon atoms, the methyl group being preferred. The number of moieties is preferably from 30 to 120.

The present invention further relates to the use of a composition of the present invention for the preparation of a hydraulic composition, preferably a mortar and/or concrete and/or tile adhesive composition.

The present invention further also relates to the use of a grinding material selected from the group consisting of sand, limestone, calcined clay, recycled concrete fines and mixture thereof as grinding medium of biochar, preferably biochar having a particle size D50 ranging from 5 mm to 50 mm.

Another object of the present invention relates to the use of a biochar having a particle size D50 ranging from 300 µm to 1000 µm for the preparation of a hydraulic composition.

Advantageously, the composite filler composition obtained by the process of the present invention is non-explosive at 500 g/m³. The process of preparation of the composite filler composition of the present invention can therefore be conducted industrially with reduced explosion risks. Since the obtained composite filler composition is non-explosive, the process further does not require complex equipment.

Furthermore, owing to the use of biochar, acting as a CO₂ capturing filler as described in WO2023/281220, the composite filler composition obtained by the process of the present invention allows to lower the carbon footprint of the obtained mortar and/or concrete and/or tile adhesive while displaying equivalent adhesion properties.

### EXAMPLES

### Method of measurement of particle size distribution

In the present description and accompanying claims, the particle size distribution is measured using dry sieve analysis method according to the European NF EN 933-1 standard of Mai 2012.

### Explosivity measurement: 20-L Sphere Test as described previously is performed using the following equipment (Table 1):

### Equipment characteristics

**Table 1**

| Parameter | Characteristics |
|---|---|
| Explosimeter | Kuhner 20-L Sphere |
| Pressure sensor | Piezoelectric sensor εₜ KSEP Kuhner System |
| Scattered device | Quick electro pneumatic valve and an adapted scattered device |
| Ignition source | Chemical ignition of 2*1 kJ |

Method of measurement of slipping: according to the standard NF P61-610-2 NF EN 12004-2 April 2017
Method of measurement of the initial adhesion: according to the standard NF P61-610-2 NF EN 12004-2 April 2017
Method of measurement of the adhesion after water treatment: according to the standard NF P61-610-2 NF EN 12004-2 April 2017
Method of measurement of the adhesion after heat treatment (70°C): according to the standard NF P61-610-2 NF EN 12004-2 April 2017
Method of measurement of Open Time: according to the standard NF P61-610-2 NF EN 12004-2 April 2017 wherein the measure is performed after 5, 20 and 30 minutes.
Tile adhesive classification is obtained according to ISO 13007-1 according to the standard NF P61-610-1 NF EN 12004-1 April 2017.

### General description of the grinding process:

The grinding material is silica sand supplied by Sibelco and sold under the name Silica MI 0.3-0.6 DS. The particle size of the sand ranges from 300 µm to 600 µm and the sand has a D50 of 448 µm. The biochar, is biochar from a source of wood, having an initial maximum particle size between 5 and 15 mm. The biochar and the sand are essentially dry having a moisture content of less than 1% based on the dry weight of the biochar and sand, respectively.

The ratio of biochar and sand introduced in the mixer is indicated in Table 2. Table 2 further indicates whether the sand (grinding material) was, before the grinding step, humidified.

**Table 2**

| Composite filler composition | Ratio Sand: Biochar | Water added* (yes/no) |
|---|---|---|
| C1 (invention) | 75/25 | no |
| C2 (invention) | 75/25 | yes |
| C3 (comparative) | 50/50 | no |
| C4 (invention) | 50/50 | yes |

| | | |
|---|---|---|
| *Amount of water added to the composite filler composition 1 hour before the grinding step (ii) equals to 4 wt.% based on the dry weight of the sand in the composite filler composition. | | |

The mixing is performed for 1.5 hour, at 300 rpm with constant monitoring of the temperature in the mixer.

The explosivity of the composite filler compositions obtained is measured according to EN ISO/IEC 80079-20-2 of February 2016 at 500 g/m³. The results are shown in Table 3.

**Table 3**

| Composition | Pressure variation (Pm) |
|---|---|
| C1 (invention) | 0.1 |
| C2 (invention) | 0 |
| C3 (comparative) | 7.4 |
| C4 (invention) | 0.2 |

The biochar is considered non-explosive at a concentration of 50 g/m³. The results show that the compositions C1, C2 and C4 according to the present invention are considered non-explosive at a concentration of 500 g/m³. The explosivity limit of the compositions of the present invention is lower by a factor ten compared to the exclusivity limit of the biochar before processing.

The maximum particle size of the composite filler composition after grinding as determined by sieving ranges from 0 to 1500 µm and the composite filler compositions have a D50 of 492 µm and 440 µm for the composition C2 and C4, respectively.

### Preparation of tile adhesives compositions:

Two different tile adhesives with a dry composition as shown in Table 4.

**Table 4**

| | Ref 1 (comparative) Dry weight (%) | Ref 2 (invention) Dry weight (%) |
|---|---|---|
| Cement (CEM I Saint Pierre La Cour) | 30 | 30 |
| Sand | 68.15 | 58.15 |
| Cellulose ether (MECELLOSE^{®} HiEND-3001 supplied by Lotte Fine Chemical) | 0.35 | 0.35 |
| Latex (ELOTEX^{®} FX 1000 supplied by Celanese) | 1 | 1 |
| Accelerator (calcium formate supplied by Berolan Gmbh) | 0.5 | 0.5 |
| Composite filler composition | 0 | 10 (composition C4) |

The tile adhesives were prepared according to the following procedure: the sand was weighed into the mixing bowl, which has been placed on a scale beforehand. The - sand used for the preparation of the tile adhesive compositions Ref 1 and Ref 2 has a particle size comprised in the range from 0 - 600 µm and the sand has a D50 of 300 µm.

Cement was added to the sand, followed by the addition of cellulose ether, then latex and finally the calcium formate. The dry mix was blended in the mixer for 30 seconds, then the water was added and blended for a further 30 seconds. The quantity of water added to Ref 1 is 23.5% and 26.5 % for Ref 2, based on the dry weight of the respective tile adhesive compositions. The formulation is then blended by hand for one minute before using the mixer for a final minute. The formulation is left for five minutes before testing.

Comparison of the mechanical properties of the tile adhesives is shown in Table 5:

**Table 5**

| | Ref 1 (comparative) | Ref 2 (invention) |
|---|---|---|
| Slipping (mm) | 0.31 | 0.3 |
| Initial adhesion | 1.5 | 1.14 |
| Adhesion after water treatment | 1.3 | 1.0 |
| Adhesion after heat treatment (70°C) | 1.2 | 1.0 |
| Open Time 5' | 1.5 | 1.34 |
| Open Time 20' | 1.4 | 1.69 |
| Open Time 30' | 1.2 | 1.41 |
| Tile adhesive classification | C2ET | C2ET |

The composite filler composition of the present invention allows the preparation of tile adhesives having comparable properties.

## Claims

1. Process for the preparation of a composite filler composition, comprising the steps of:
(i) providing a composition C, comprising:
- biochar having a maximum particle size ranging from 5 to 50 mm as determined by sieve analysis; and
- at least one grinding material selected from the group consisting of sand, limestone, calcined clay, recycled concrete fines, and mixtures thereof, having a maximum particle size ranging from 0 to 5 mm as determined by sieve analysis, wherein the weight ratio of grinding material to biochar ranges from 99/1 to 35/65; and
(ii) grinding the composition C to obtain a composite filler composition, wherein the grinding step is conducted in the presence of water when the weight ratio of the biochar in the composition C, expressed as the dry weight of the biochar based on the total dry weight of the composition C, is higher than or equal to 30 wt.%.

2. Process according to claim 1, wherein in step (i) the biochar to be ground has an initial maximum particle size higher than or equal to 10 mm and/or lower than or equal to 40, 30, 20 or 15 mm.

3. Process according to any one of claims 1 to 2 wherein the grinding material comprises at least 75 wt.%, preferably at least 95 wt.% of sand.

4. Process according to claim 3 wherein the maximum particle size of the sand ranges from 0 to 2 mm, more preferably from 0 to 1 mm.

5. Process according to any one of claims 1 to 4 wherein the weight ratio of the grinding material to the biochar in the composition C ranges from 80/20 to 40/60, preferably from 70/30 to 60/40.

6. Process according to any one of claims 1 to 5 further comprising a step wherein water is added to the biochar to be ground, the sand or the composition C in an amount from 2.0 wt.% to 10.0 wt.% based on the dry weight of the composition C, and wherein the addition of water is performed before or during step (i) or (ii).

7. Process according to any one of claims 1 to 6 further comprising a step (iii) wherein the biochar is contacted with an inert gas selected from the group consisting of nitrogen, argon, carbon dioxide or a source of carbon dioxide, and wherein step (iii) and the grinding step (ii) can be performed successively, in any order, or simultaneously, preferably step (iii) and step (ii) are performed simultaneously.

8. Process according to claim 7 wherein the inert gas is carbon dioxide or a source of carbon dioxide and wherein the concentration of carbon dioxide in the source of carbon dioxide is higher than the concentration of carbon dioxide in the atmospheric air, preferably the carbon dioxide source used is a by-product of cement production.

9. Use of a grinding material selected from the group consisting of sand, limestone, calcined clay, recycled concrete fines and mixtures thereof as a grinding medium of biochar, preferably biochar having a maximum particle size ranging from 5 mm to 50 mm.

10. A composite filler composition obtained by the process defined in claims 1 to 8.

11. Use of the composite filler composition obtained according to the process of claims 1 to 8 for the preparation of a hydraulic composition, preferably mortar, concrete and/or tile adhesive composition.

12. Process for the preparation of a hydraulic composition comprising mixing the composite filler composition as defined in claim 10 with one or more components selected from the group consisting of cement, corrective sand, aggregates and mixing water.

13. Process according to claim 12 wherein the cement comprises from 35 wt.% to 95 wt.% of Portland clinker.

14. Hydraulic composition, preferably concrete and/or mortar and/or tile adhesive composition, comprising the composite filler composition as defined in claim 10, or obtained by the process of claim 12 or 13.

15. Hydraulic composition according to claim 14, **characterized in that** it comprises from 10 wt.% to 80 wt.% of total sand, based on the dry weight of the hydraulic composition, wherein the particle size of the total sand ranges from 0 to 5 mm, preferably 0 to 2 mm.
